# EUROPÄISCHE PATENTSCHRIFT

(11) **EP 2 753 504 B1**
(45) Veröffentlichungstag und Bekanntmachung des Hinweises auf die Patenterteilung: **30.09.2015**
(21) Anmeldenummer: 12719709.3
(22) Anmeldetag: 08.05.2012
(51) Int. Cl.: B60R 13/08

(54) **WÄRMEABSCHIRMKÖRPER MIT TEMPERATURFESTEN BEFESTIGUNGSSTELLEN UND VERFAHREN ZU DESSEN HERSTELLUNG**
THERMALLY SHIELDING BODY WITH TEMPERATURE-RESISTANT FASTENING POINTS, AND METHOD FOR PRODUCING IT
CORPS DE PROTECTION THERMIQUE COMPORTANT DES ZONES DE FIXATION THERMORÉSISTANTES ET PROCÉDÉ POUR SA FABRICATION

(30) Priorität: 05.09.2011 DE 102011082132
(43) Veröffentlichungstag der Anmeldung: 16.07.2014
(73) Patentinhaber: Federal-Mogul Sealing Systems Gmbh, 57562 Herdorf (DE)
(72) Erfinder: KRUS, Ralf, 51789 Lindlar (DE)
(74) Vertreter: Becker Kurig Straus
(86) Internationale Anmeldenummer: PCT/EP2012/058411
(87) Internationale Veröffentlichungsnummer: WO 2013/034321

(56) Entgegenhaltungen:
- EP-A2- 1 548 246
- DE-U1-202010 013 507

## Beschreibung

Die vorliegende Erfindung betrifft einen Wärmeabschirmkörper mit temperaturfesten Befestigungsstellen.

Herkömmliche Abschirmelemente wie Akustik- oder Wärmeabschirmbleche sind beispielsweise aus den Dokumenten EP 1 609 681 A1, DE 10 2005 015 246 A1, DE 10 2005 015 244 A1, DE 10 2005 006 577 A1 und, DE 102 47 641 B3 bekannt. Das Dokument EP1 548 246 A2 offenbart einen Wärmeabschirmkörper nach dem Ober-begriff des Anspruchs 1 und ein Verfahren zum Herstellen eines Wärmeabschirmkörpers nach dem Oberbegriff des Anspruch 15.

Herkömmliche Abschirmelemente aus Aluminium wie Akustik- oder Wärmeabschirmbleche können oft nicht direkt an besonders heißen Bauteilen wie einem Abgaskrümmer, einem Turbolader etc. befestigt werden, da diese Bauteile im Betrieb höhere Temperaturen erreichen als der Schmelzpunkt von Aluminium.

Es besteht daher im Stand der Technik ein Bedarf, Abschinnkörper aus Aluminium auch direkt an Bauteile montieren zu können, deren Betriebstemperatur über dem Schmelzpunkt von Aluminium von ca 660 °C liegt.

Gemäß einem ersten Aspekt der vorliegenden Erfindung wird ein Wärmeabschirmkörper gemäß Anspruch 1 bereitgestellt.

Das Metallblechelement mit höherer Wärmefestigkeit kann am Rand der Aussparung stoffschlüssig mit dem Wärmeabschirmblech verbunden sein, wodurch die Dicke des Wärmeabschirmkörpers gering gehalten werden kann. Das Metallblechelement mit höherer Wärmefestigkeit kann auch nur an einem Rand des Metallblechelements stoffschlüssig mit dem Wärmeabschirmblech verbunden sein, wobei bei dieser Ausführungsform das Wärmeabschirmblech das Metallblechelement zumindest teilweise nach außen abschirmen kann.

Das Metallblechelement ist aus einem Metallblech mit einer, im Vergleich zu Aluminium höheren Wärmefestigkeit gefertigt. Die Befestigungsstelle kann als Bohrung oder Schraubenloch oder als Aufnahme für ein anderes Befestigungselement ausgeführt sein. Es ist ebenfalls vorgesehen, die Befestigungsstelle als Struktur auszuführen, die in eine komplementäre Struktur an einem heißen Motorelement, wie einem Teil einer Abgasanlage eines Verbrennungsmotors eingesetzt bzw. in Eingriff gebracht werden kann.

In einer beispielhaften Ausführungsform erstreckt sich das Metallblechelement mit höherer Wärmefestigkeit wie ein Rahmen entlang des gesamten Randes des Wärmeabschirmblechs aus Aluminium. Damit kann das Wärmeabschirmblech aus Aluminium vor allem am Rand weiter verstärkt werden, um beispielsweise die Schwingungsfestigkeit des Wärmeabschirmkörpers zu erhöhen.

In einer anderen beispielhaften Ausführungsform ist das Metallblechelement mit höherer Wärmefestigkeit, im Wesentlichen punktförmig stoffschlüssig mit dem Wärmeabschirmblech aus Aluminium verbunden. In dieser Ausführungsform ist vorgesehen, die nur punktweise (im Sinne von Schweißpunkt nicht im Sinne von "geometrischem Punkt") mit dem Wärmeabschirmblech verbundenes Metallblechelement wie auch das Wärmeabschirmblech zwischen den Schweißpunkten so zu verformen, dass eine Reihe von Belüftungsöffnungen entsteht, die zu einer besseren Kühlung der stoffschlüssigen Verbindung beitragen können. Dabei kann sowohl das Metallblechelement als auch das Wärmeabschirmblech wellenförmig verformt sein.

In einer weiteren beispielhaften Ausführungsform ist das Metallblechelement mit höherer Wärmefestigkeit, im Wesentlichen entlang des ganzen Randes oder entlang des Randes der Aussparung linienförmig oder flächig stoffschlüssig mit dem Wärmeabschirmblech verbunden. Diese Ausführungsform dient dazu, möglichst viel Wärme von dem Metallblechelement an das Wärmeabschirmblech zu übertragen, um durch die Wärmeableitung in Richtung des Wärmeabschirmblechs den Bereich der stoffschlüssigen Verbindung thermisch zu entlasten. Dies ist besonders für Ausführungsformen von Wärmeabschirmkörpern geeignet, bei denen das Metallblechelement an der Seite des Wärmeabschirmblechs verbunden ist, die der abzuschirmenden Wärmequelle abgewandt ist.

In einer zusätzlichen beispielhaften Ausführungsform wird der Stoffschluss durch elektromagnetisches Puls-Blechschweißen erreicht. Die elektromagnetische Puls Technologie (EMPT) ist ein berührungsloses Fertigungsverfahren zum Schweißen, Fügen, Umformen und Schneiden von Metallen. Bei diesem Verfahren werden elektromagnetische Spulen verwendet, durch die kurzzeitig ein Strom mit sehr hoher Stromstärke fließt, der von einem Pulsgenerator bereitgestellt wird. Durch elektromagnetische Kräfte können insbesondere auch nicht-magnetische Metalle wie Aluminium verarbeitet und insbesondere verformt werden. Beim stoffschlüssigen elektromagnetischen Puls-Blechschweißen können stoffschlüssige Verbindungen metallischer Werkstoffe hergestellt werden, ohne dass thennischer Lasten aufgebracht werden müssen, womit Gefügeänderungen vermieden werden können. Schwer schweißbare Edelstähle sind mit dieser Technik stoffschlüssig miteinander fügbar wie z. B. auch Werkstoffpaarungen wie Aluminium-Stahl oder Stahl-Kupfer.

In einer anderen beispielhaften Ausführungsform wird der Stoffschluss durch Reibschweißen oder Orbitalreibschweißen erreicht. Reibschweißen ermöglicht ebenfalls eine stoffschlüssige Verbindung von Werkstoffpaarungen wie Aluminium-Stahl.

In einer weiteren beispielhaften Ausführungsform wird der Stoffschluss durch Ultraschallschweißen erreicht. Ultraschallschweißen gestattet es ebenfalls relativ einfach Werkstoffpaarungen wie Aluminium-Stahl miteinander stoffschlüssig zu verbinden.

In einer zusätzlichen beispielhaften Ausführungsform ist das Wärmeabschirmblech aus mehreren Lagen zusammengesetzt. In einer Ausführungsform umfasst das Abschirmblech, mindestens zwei Bleche, mindestens eines aus Aluminium, wobei das Mehrschicht-Abschirmblech eine Gesamtdicke zwischen 2 mm und 10 mm aufweist. Weiterhin ist es möglich mehr als zwei Bleche aus Aluminium mit einer Gesamtdicke von zwischen 2 mm und 10 mm zu einem Abschirmblech zu kombinieren. Das Abschirmblech kann insbesondere als "3D Teil" ausgeführt sein, das an eine Geometrie eines abzuschirmenden Maschinenteils wie beispielsweise an die eines Abgaskrümmers oder eines Turboladers angepasst ist. Das Abschirmblech kann zudem mit Öffnungen zum Schallschutz oder mit zusätzlichen Dämmlagen versehen sein. Die Dicke des Abschirmblechs kann ebenfalls variiert sein, um den Wärmeabschirmkörper zu verstärken. Zusätzlich kann das Abschirmblech mindestens in einer Lage mit Rippen oder Sicken zur Versteifung des Abschirmblechs versehen sein. Es ist ebenfalls vorgesehen, die Struktur des Abschirmblechs in stark belasteten Bereichen durch Kaltverfestigung, Rippen, Sicken, Wellungen und/oder Bördel zu verstärken. In einer Grundform kann das Wärmeabschirmblech beispielsweise als ein einlagiges Aluminium-Glattblech mit einer Dicke zwischen 0,3 bis 1,5 mm ausgeführt werden. In einer anderen

Ausführungsform ist das Wärmeabschirmblech beispielsweise als ein einlagiges Aluminium-Strukturblech mit einer Dicke zwischen 0,3 bis 1,5 mm ausgeführt. Es ist zudem vorgesehen perforierte Bleche zur Akustikabschirmung einzusetzen.

In einer anderen beispielhaften Ausführungsform umfasst das Wärmeabschirmblech mindestens zwei Lagen, die durch Clinchen, Toxen, Bördeln, Nieten, Kleben, Druckfügen Stanznieten oder auch durch Verschweißen miteinander verbunden sind.

In einer weiteren beispielhaften Ausführungsform umfasst das Metallblechelement mit höherer Wärmefestigkeit beschichteten Stahl oder Edelstahl, der eine Dicke zwischen 0,2 mm und 1 mm aufweist. Diese Materialdicken sind besonders für Aluminium-Abschirmbleche mit einer Dicke zwischen 0,3 mm und 10 mm geeignet.

In einer zusätzlichen beispielhaften Ausführungsform überlappen sich das Metallblechelement mit höherer Wärmefestigkeit und das Wärmeabschirmblech und sind außerdem im Bereich der Überlappung stoffschlüssig miteinander verbunden. Die Überlappung gestattet eine einfache Verbindung des Metallblechelements und des Wärmeabschirmblechs. Das Metallblechelement kann an der Seite des Wärmeabschirmblechs angeordnet sein, die der abzuschirmenden Wärmequelle zugewandt ist. Diese Ausführungsform gestattet es beispielsweise, das Wärmeabschirmblech teilweise über das Metallblechelement zu führen und somit eine besonders gute Wärmeabschirmung auch der Befestigungselemente zu erreichen, mit denen der Wärmeabschirmkörper befestigt ist. Das Metallblechelement kann auch an der Seite des Wärmeabschirmblechs angeordnet sein, die der abzuschirmenden Wärmequelle abgewandt ist. Diese Ausführungsform gestattet es, das Metallblechelement über die Rückseite des Wärmeabschirmblechs zu kühlen, und so die stoffschlüssige Verbindung thermisch zu entlasten. Diese Ausführungsform hat weiterhin den Vorteil, im Falle eines Versagens der stoffschlüssigen Verbindung, das Wärmeabschirmblech noch durch die größeren Metallblechelemente gehalten werden kann, was insbesondere im Falle runder geschlossener Aussparungen zutrifft.

In einer anderen beispielhaften Ausführungsform ist das Metallblechelement mit höherer Wärmefestigkeit mit einer Struktur versehen, um eine punktförmige oder linienförmige Auflage am heißen Bauteil zu ermöglichen. Durch eine punkt- oder linienförmige Auflagefläche kann im Vergleich zu einem flächigen Kontakt die Wärmeleitung zwischen der Auflage des Metallblechelements und dem Bauteil, an dem das Metallblechelement befestigt ist minimiert werden, wodurch sich wiederum der Wärmeübertrag von dem Bauteil zu dem Wärmeabschirmblech minimieren lässt. Durch die kleinere Auflagefläche wird auch der durch die Auflagefläche geführte Wärmeübertragung minimiert.

In einer weiteren beispielhaften Ausführungsform umfasst der Abschinnkörper weiter Elemente aus Metallblechelement mit höherer Wärmefestigkeit, die mit dem Wärmeabschirmblech stoffschlüssig verbunden sind. Diese Metallblechelemente mit höherer Wärmefestigkeit dienen in dieser Ausführungsform zur Verstärkung der Struktur des Wärmeabschirmblechs. Die Metallblechelemente mit höherer Wärmefestigkeit können mit oder ohne entsprechende Aussparungen an dem Wärmeabschirmblech an diesem stoffschlüssig befestigt werden. Dabei sollte jedoch die Verwendung des Metallblechelements mit höherer Wärmefestigkeit möglichst minimiert werden, um das Gewicht des Abschirmteils möglichst wenig zu erhöhen.

In einer zusätzlichen beispielhaften Ausführungsform umfasst der Wärmeabschirmkörper weiter Halter, Clips, Rohrstutzen, Gewindeelemente, die mit dem Metallblechelement mit höherer Wärmefestigkeit und/oder mit dem Wärmeabschirmblech stoffschlüssig verbunden sind. Die Halter, Clips, Rohrstutzen, Gewindeelemente, sind bevorzugt mit dem Wärmeabschirmblech formschlüssig verbunden. Es ist jedoch ebenfalls möglich, diese Elemente im Bereich des Metallblechelements mit höherer Wärmefestigkeit stoffschlüssig zu verbinden, insbesondere wenn das Metallblechelement als Verstärkung dient. Diese Halter, Clips, Rohrstutzen, Gewindeelemente können beispielsweise dazu dienen, Leitungen von Sensoren wie einer Lambda-Sonde zu halten.

Gemäß einem weiteren Aspekt der vorliegenden Erfindung wird ein Verfahren zum Herstellen eines Wärmeabschirmkörpers gemäß Anspruch 15 bereitgestellt. Das stoffschlüssige Verbinden kann beispielsweise vor oder nach dem Zusammenfügen der Lagen eines mehrschichtigen Abschirmblechs erfolgen. Das stoffschlüssige Verbinden kann durch eines der vorstehend beschriebenen Fügeverfahren erreicht werden, die besonders für das Verbinden von Aluminium- und Stahl- bzw. Eisenwerkstoffen geeignet sind.

Das Verfahren soll ebenfalls alle Schritte umfassen können die die Herstellung oder Bildung eines der vorstehend beschriebenen gegenständlichen Merkmale eines erfindungsgemäßen Wärmeabschirmkörpers beschrieben sind. Es sind daher alle ebenfalls alle Schritte als offenbart anzusehen die notwendig sind um die vorstehend beschriebenen gegenständlichen Merkmale bereitzustellen oder zu erzeugen.

In den Figuren werden bevorzugte und vereinfachte Ausführungsformen zur Veranschaulichung der Erfindung dargestellt.
Figur 1 zeigt eine Ansicht eines erfindungsgemäßen Wärmeabschirmkörpers.
Figur 2 stellt eine Teilschnittansicht durch einen Befestigungsbereich eines erfindungsgemäßen Wärmeabschirmkörpers dar.
Figur 3 zeigt eine Teilschnittansicht durch einen Befestigungsbereich einer anderen Ausführungsform eines erfindungsgemäßen Wärmeabschirmkörpers.
Figur 4 stellt eine Ansicht einer anderen Ausführungsform eines erfindungsgemäßen Wärmeabschirmkörpers dar.

Sowohl in den Figuren als auch in deren Beschreibung werden gleiche oder ähnliche Bezugszeichen verwendet, um gleiche oder ähnliche Elemente zu bezeichnen.

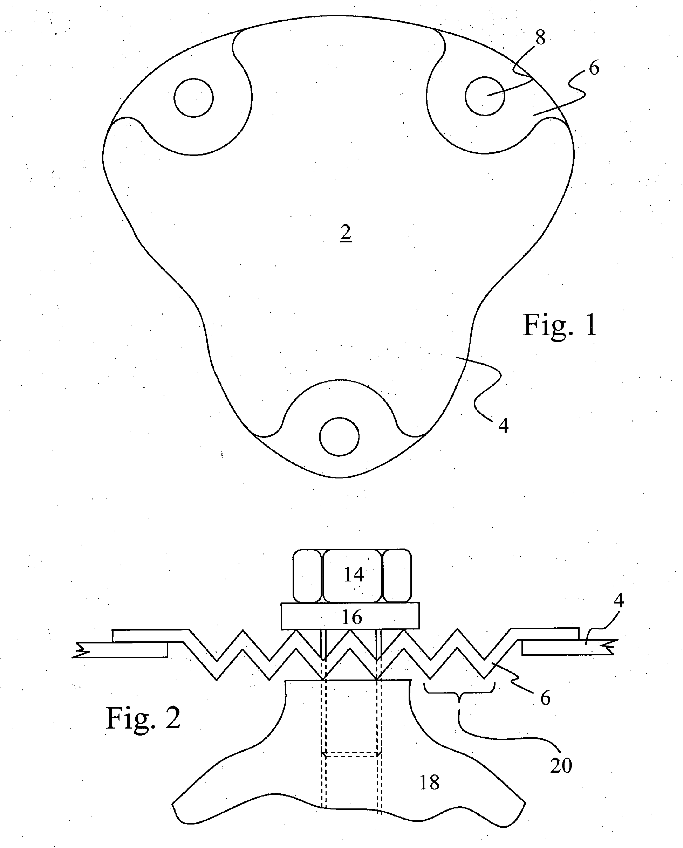

Figur 1 zeigt eine Ansicht eines erfindungsgemäßen Wärmeabschirmkörpers 2, der mit drei temperaturfesten Befestigungsstellen 8 versehen ist. Der Wärmeabschirmkörper 2 umfasst ein ein- oder mehrlagiges Wärmeabschirmblech 4 aus Aluminium. Das Wärmeabschirmblech 4 aus Aluminium ist im Bereich mindestens einer Befestigungsstelle 8 mit einer Aussparung versehen. In der Aussparung ist ein Metallblechelement 6 mit höherer Wärmefestigkeit angeordnet, das an einem Rand der Aussparung oder des Metallblechelements 6 stoffschlüssig mit dem Wärmeabschirmblech 4 verbunden ist. Die mindestens eine temperaturfeste Befestigungsstelle 8 ist dabei auf dem Metallblechelement 6 mit höherer Wärmefestigkeit angeordnet. Wie in der Zeichnung zu erkennen, weist der Rand der Aussparung des Wärmeabschirmblechs 4 einen gleichmäßigen Abstand zu der Befestigungsstelle 8 auf. Dies ist im Wesentlichen durch einen Temperaturgradienten in dem Metallblechelement 6 zwischen der Befestigungsstelle 8 und dem Rand der Aussparung des Wärmeabschirmblechs 4 bedingt. Die Temperatur sollte im Betrieb in diesem Bereich soweit abgefallen sein, dass sich der Rand des Wärmeabschirmblechs 4 noch weit genug unterhalb der Schmelztemperatur von Aluminium befindet, dass der Wärmeabschirmkörper seine Funktion erfüllen kann.

Figur 2 stellt eine Teilschnittansicht durch einen Befestigungsbereich eines erfindungsgemäßen Wärmeabschirmkörpers 2 dar. Das Wärmeabschirmblech 4 aus Aluminium ist nur an den Rändern als Teilschnitt angedeutet. Das Metallblechelement 6 mit höherer Wärmefestigkeit ist mit einer Schraube 14 und einer Unterlegscheibe/Spannscheibe 16 an einem thermisch belasteten Bauteil 18 befestigt. Das thermisch belastete Bauteil 18 kann dabei beispielsweise ein Abgaskrümmer oder ein Teil eines Turboladergehäuses sein.

Das Metallblechelement 6 mit höherer Wärmefestigkeit überlappt das Wärmeabschirmblech 4 aus Aluminium und ist im Bereich der Überlappung stoffschlüssig mit diesem verbunden. Das Metallblechelement 6 ist dabei an der Seite des Wärmeabschirmblechs 4 angeordnet, die der abzuschirmenden Wärmequelle abgewandt ist. Diese Ausführungsform gestattet es, das Metallblechelement 6 über die Rückseite des Wärmeabschirmblechs 4 zu kühlen, und so die stoffschlüssige Verbindung thermisch zu entlasten. Diese Ausführungsform hat weiterhin den Vorteil, im Falle eines Versagens der stoffschlüssigen Verbindung, das Wärmeabschirmblech 4 noch durch das größere Metallblechelement gehalten werden kann, besonders wenn die Aussparung kreisförmig ist und keine Verbindung zum Rand hat.

Das Metallblechelement 6 ist mit einer Struktur versehen, um eine linienförmige Auflage am heißen Bauteil 18 und der Unterlegscheibe 16 zu ermöglichen. Dadurch kann die Wärmeübertragung von dem Bauteil 18 und der Unterlegscheibe 16 zu dem Metallblechelement 6 verringert werden. Die Struktur ist hier als gerade Wellung mit einer Dreiecksform ausgeführt. Die Struktur erstreckt sich ebenfalls im Bereich 20 neben der Stelle an dem das Metallblechelement 6 zwischen dem heißen Bauteil 18 und der Unterlegscheibe 16 eingeklemmt ist. Diese Struktur in dem Bereich 20 dient dazu, die tatsächliche Strecke, über die ein Wärmeübertrag von dem Bauteil 18 bzw. der Unterlegscheibe 16 zu dem Wärmeabschirmblechs 4 stattfinden kann zu erhöhen, um diesen Wärmeübertrag zu minimieren. Weiterhin ermöglicht die Struktur im Bereich 20 eine gewisse elastische Kopplung des Wärmeabschirmkörpers 2 an das Bauteil 18, womit thermische Ausdehnungen ausgeglichen und Vibrationen von dem Bauteil 18 entkoppelt werden können.

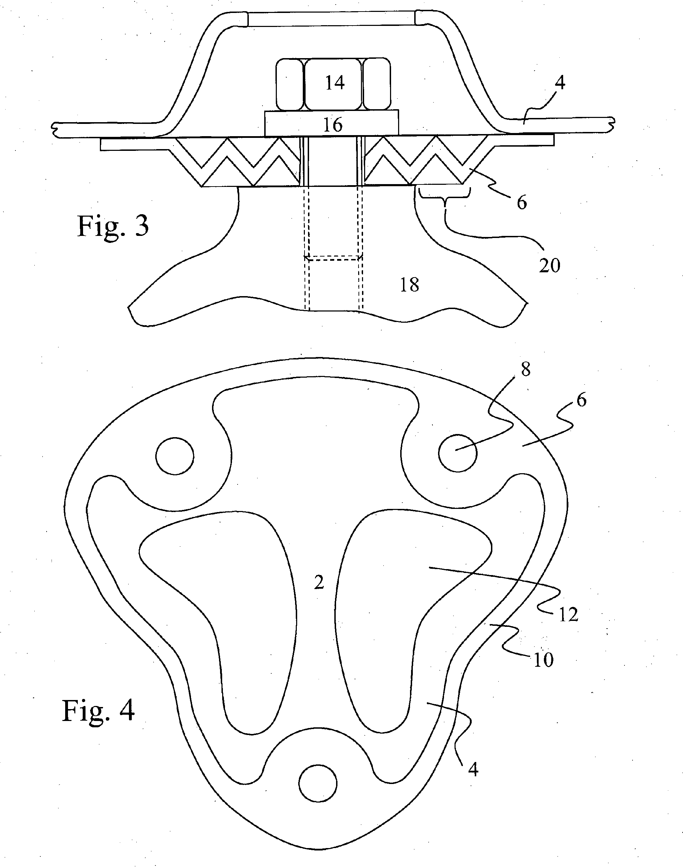

Figur 3 stellt eine Teilschnittansicht durch einen Befestigungsbereich einer anderen Ausführungsform eines erfindungsgemäßen Wärmeabschirmkörpers 2 dar. Das Wärmeabschirmblech 4 aus Aluminium, das Metallblechelement 6 mit höherer Wärmefestigkeit, die Schraube 14 und einer Unterlegscheibe/Spannscheibe 16 sowie das thermisch belastete Bauteil 18 entsprechen im Wesentlichen den in der Figur 2 dargestellten Elementen.

Ähnlich wie in Figur 2 überlappt das Metallblechelement 6 mit höherer Wärmefestigkeit das Wärmeabschirmblech 4 aus Aluminium und ist im Bereich der Überlappung stoffschlüssig mit diesem verbunden. Das Metallblechelement 6 ist dabei an der Seite des Wärmeabschirmblechs 4 angeordnet, die der abzuschirmenden Wärmequelle bzw. dem Bauteil 18 zugewandt ist. Diese Ausführungsform gestattet es, wie dargestellt, das Wärmeabschirmblech 4 teilweise über das Metallblechelement 6 zu führen und so eine besonders gute Abschirmung insbesondere auch des Metallblechelements 6 und des Kopfs der Schraube 14 zu erreichen. Hier ist das Metallblechelement 6 am Rand des Metallblechelements 6 mit dem Wärmeabschirmblech 4 stoffschlüssig verbunden.

Das Metallblechelement 6 ist, ebenfalls wie in Figur 2, mit einer Struktur versehen, um eine linienförmige Auflage am heißen Bauteil 18 und der Unterlegscheibe 16 zu ermöglichen. Die Struktur ist in Figur 3 als ringförmige Wellen um die Schraube 14 ausgeführt. Die Wellen weisen, wie in Figur 2, eine Dreiecksform auf. Es sind jedoch ebenfalls andere Wellenformen möglich. Auch in Figur 3 erstreckt sich eine Struktur im Bereich 20 neben der Stelle an dem das Metallblechelement 6 eingeklemmt ist, mit dem gleichen Zweck, wie er bereits in Figur 2 beschieben wurde.

Figur 4 zeigt eine Ansicht einer anderen Ausführungsform eines erfindungsgemäßen Wärmeabschirmkörpers von Figur 1. Wie in Figur 1 zeigt der Wärmeabschirmkörper 2 drei temperaturfeste Befestigungsstellen 8. Im Gegensatz zu der in Figur 1 dargestellten Ausführungsform erstreckt sich das Metallblechelement 6 mit höherer Wärmefestigkeit um den gesamten Rand Wärmeabschirmblechs 4. In dieser Ausführungsform wird das Wärmeabschirmblech 4 durch das umlaufende einstückige Metallblechelement 6 weiter stabilisiert und verstärkt, sodass es auch an Bauteilen verwendet werden kann, die stark vibrieren. Zusätzlich ist das Wärmeabschirmblech 4 noch mit Verstärkungen 12 versehen, die direkt auf das Wärmeabschirmblech 4 aufgebracht werden können. Die Verstärkungen 12 können auch vorher angebrachte (nicht dargestellte) Aussparungen verschließen. Die Verstärkungen 12 können aus dem gleichen Material wie die Metallblechelemente 6 bestehen, wodurch sie mit dem gleichen stoffschlüssigen Fügeverfahren mit dem Wärmeabschirmblech 4 verbunden werden können.

Es sollte klar sein, dass die vorliegende Erfindung nicht nur auch die in den Figuren dargestellten Ausführungen beschränkt ist, sondern nur durch den in den Ansprüchen definieren Schutzumfang. Weiterhin sollen auch alle Kombinationen von Einzelmerkmalen, die jeweils einzeln in den jeweiligen Ausführungsformen offenbart sind, ebenfalls als offenbart erachtet werden.

## Patentansprüche

1. Wärmeabschirmkörper (2) mit mindestens einer temperaturfesten Befestigungsstelle (8), umfassend ein Wärmeabschirmblech (4) aus Aluminium, wobei das Wärmeabschirmblech (4) im Bereich der mindestens einen Befestigungsstelle eine Aussparung aufweist, wobei in der Aussparung ein Metallblechelement (6) mit höherer Wärmefestigkeit angeordnet ist, das am Rand der Aussparung oder des Metallblechelements stoffschlüssig mit dem Wärmeabschirmblech (4) verbunden ist, wobei die mindestens eine temperaturfeste Befestigungsstelle (8) auf dem Metallblechelement (6) angeordnet ist;
**dadurch gekennzeichnet, dass**
sich das Metallblechelement (6) mit höherer Wärmefestigkeit wie ein Rahmen entlang zumindest eines Teils des Randes des Wärmeabschirmblechs (4) aus Aluminium erstreckt.

2. Wärmeabschirmkörper (2) nach Anspruch 1, wobei sich das Metallblechelement (6) mit höherer Wärmefestigkeit wie ein Rahmen entlang des gesamten Randes des Wärmeabschirmblechs (4) aus Aluminium erstreckt.

3. Wärmeabschirmkörper (2) nach Anspruch 1 oder 2, **dadurch gekennzeichnet, dass** das Metallblechelement (6) mit höherer Wärmefestigkeit im Wesentlichen punktförmig stoffschlüssig mit dem Wärmeabschirmblech (4) aus Aluminium verbunden ist.

4. Wärmeabschirmkörper (2) nach Anspruch 1 oder 2, wobei das Metallblechelement (6) mit höherer Wärmefestigkeit im Wesentlichen entlang des ganzen Randes oder entlang des Randes der Aussparung linienförmig stoffschlüssig mit dem Wärmeabschirmblech (4) verbunden ist.

5. Wärmeabschirmkörper (2) nach einem der vorstehenden Ansprüche, wobei der Stoffschluss durch elektromagnetisches Puls-Blechschweißen erreicht wurde.

6. Wärmeabschirmkörper (2) nach einem der vorstehenden Ansprüche, wobei der Stoffschluss durch Reibschweißen oder Orbitalreibschweißen erreicht wurde.

7. Wärmeabschirmkörper (2) nach einem der vorstehenden Ansprüche, wobei der Stoffschluss durch Ultraschallschweißen erreicht wurde.

8. Wärmeabschirmkörper (2) nach einem der vorstehenden Ansprüche, wobei das Wärmeabschirmblech (4) aus mehreren Lagen zusammengesetzt ist, beispielsweise mindestens zwei Blechen, mindestens eines davon aus Aluminium, mit einer Gesamtdicke zwischen 2 mm und 10 mm, oder mehr als zwei Blechen aus Aluminium mit einer Gesamtdicke zwischen 2 mm und 10 mm.

9. Wärmeabschirmkörper (2) nach Anspruch 8, wobei das Wärmeabschirmblech (4) mindestens zwei Lagen umfasst, wobei die Lagen durch Clinchen, Toxen, Bördeln, Nieten, Kleben, Druckfügen, Stanznieten oder durch Verschweißen miteinander verbunden sind.

10. Wärmeabschirmkörper (2) nach einem der vorstehenden Ansprüche, wobei das Metallblechelement (6) mit höherer Wärmefestigkeit beschichteter Stahl oder Edelstahl mit einer Dicke zwischen 0,2 mm und 1 mm ist.

11. Wärmeabschirmkörper (2) nach einem der vorstehenden Ansprüche, wobei das Metallblechelement (6) mit höherer Wärmefestigkeit und das Wärmeabschirmblech (4) einander überlappen und im Bereich der Überlappung stoffschlüssig miteinander verbunden sind.

12. Wärmeabschirmkörper (2) nach einem der vorstehenden Ansprüche, wobei das Metallblechelement (6) mit höherer Wärmefestigkeit mit einer Struktur versehen ist, um eine punktförmige oder linienförmige Auflage am heißen Bauteil zu ermöglichen, und/oder die Wärmeleistung zwischen der Auflage und dem Wärmeabschirmblech (4) zu minimieren.

13. Wärmeabschirmkörper (2) nach einem der vorstehenden Ansprüche, weiter umfassend Elemente aus Metallblechelement (6) mit höherer Wärmefestigkeit, die mit dem Wärmeabschirmblech (4) stoffschlüssig verbunden sind und zur Verstärkung der Struktur des Wärmeabschirmblechs (4) dienen.

14. Wärmeabschirmkörper (2) nach einem der vorstehenden Ansprüche, weiter umfassend Halter, Clips, Rohrstutzen oder Gewindeelemente, die mit dem Metallblechelement (6) mit höherer Wärmefestigkeit und/oder mit dem Wärmeabschirmblech (4) stoffschlüssig verbunden sind.

15. Verfahren zum Herstellen eines Wärmeabschirmkörpers (2) nach einem der vorstehenden Ansprüche, umfassend mindestens:
Bereitstellen eines Wärmeabschirmblechs (4), das mit Aussparungen versehen ist, Bereitstellen eines Metallblechelements (6) mit höherer Wärmefestigkeit, sowie stoffschlüssiges Verbinden des Metallblechelements (6) mit höherer Wärmefestigkeit (6) mit dem Wärmeabschirmblech (4) zumindest in einem Bereich der Aussparungen des Wärmeabschirmblechs (4), wobei das Metallblechelement (6) mit höherer Wärmefestigkeit mindestens eine temperaturfeste Befestigungsstelle (8) aufweist;
**dadurch gekennzeichnet, dass**
das Metallblechelement (6) derart bereitgestellt wird, dass sich das Metallblechelement (6) wie ein Rahmen entlang zumindest eines Teils des Randes des Wärmeabschirmblechs (4) aus Aluminium erstreckt.

## Claims

1. A thermally shielding body (2) with at least one temperature-resistant fastening point (8), comprising a thermally shielding plate (4) made from aluminium, wherein the thermally shielding plate (4) has a cut-out in the region of the at least one fastening point, wherein a metal-plate element (6) with greater heat resistance is arranged in the cut-out, which is connected in a material-to-material manner with the thermally shielding plate (4) at the edge of the cut-out or the metal-plate element, wherein the at least one temperature-resistant fastening point (8) is arranged on the metal-plate element (6); **characterized in that**
the metal-plate element (6) with greater heat resistance extends like a frame along at least a part of the edge of the thermally shielding plate (4) made from aluminium.

2. The thermally shielding body (2) in accordance with claim 1, wherein the metal-plate element (6) with greater heat resistance extends like a frame along the whole edge of the thermally shielding plate (4) made from aluminium.

3. The thermally shielding body (2) in accordance with claim 1 or 2, **characterised in that**, the metal-plate element (6) with greater heat resistance is connected in an essentially point-wise, material-to-material manner with the thermally shielding plate (4) made from aluminium.

4. The thermally shielding body (2) in accordance with claim 1 or 2, wherein the metal-plate element (6) with greater heat resistance is connected with the thermally shielding plate (4) in a line-wise, material-to-material manner along essentially the whole edge, or along the edge, of the cut-out.

5. The thermally shielding body (2) in accordance with one of the preceding claims, wherein the material-to-material connection has been achieved by means of electromagnetic pulse plate welding.

6. The thermally shielding body (2) in accordance with one of the preceding claims, wherein the material-to-material connection has been achieved by means of friction welding or orbital friction welding.

7. The thermally shielding body (2) in accordance with one of the preceding claims, wherein the material-to-material connection has been achieved by means of ultrasonic welding.

8. The thermally shielding body (2) in accordance with one of the preceding claims, wherein the thermally shielding plate (4) is composed of a plurality of layers, for example at least two plates; at least one of these made from aluminium with a total thickness of between 2 mm and 10 mm; or more than two plates made from aluminium with a total thickness of between 2 mm and 10 mm.

9. The thermally shielding body (2) in accordance with claim 8, wherein the thermally shielding plate (4) comprises at least two layers, wherein the layers are connected together by means of clinching, toxing, flanging, riveting, adhesive bonding, pressure joining, punch riveting, or by means of welding.

10. The thermally shielding body (2) in accordance with one of the preceding claims, wherein the metal-plate element (6) with greater heat resistance is coated steel or stainless steel, with a thickness of between 0.2 mm and 1 mm.

11. The thermally shielding body (2) in accordance with one of the preceding claims, wherein the metal-plate element (6) with greater heat resistance and the thermally shielding plate (4) overlap one another, and are connected together in the region of the overlap in a material-to-material manner.

12. The thermally shielding body (2) in accordance with one of the preceding claims, wherein the metal-plate element (6) with greater heat resistance, is provided with a structure to enable a point-wise or line-wise contact with the hot component, and/or to minimise the heat conduction between the contact and the thermally shielding plate (4).

13. The thermally shielding body (2) in accordance with one of the preceding claims, further comprising elements from the metal-plate element (5) with greater heat resistance, which are connected with the thermally shielding plate (4) in a material-to-material manner, and serve to reinforce the structure of the thermally shielding plate (4).

14. The thermally shielding body (2) in accordance with one of the preceding claims, further comprising holders, clips, nipples, or threaded elements, which are connected in a material-to-material manner with the metal-plate element (6) with greater heat resistance and/or with the thermally shielding plate (4).

15. A method for producing a thermally shielding body (2) in accordance with one of the preceding claims, comprising at least:
the provision of a thermally shielding plate (4) that is provided with cut-outs; the provision of a metal-plate element (6) with greater heat resistance, as well as the material-to-material connection of the metal-plate element (6) with greater heat resistance (6) with the thermally shielding plate (4), at least in a region of the cut-outs of the thermally shielding plate (4), wherein the metal-plate element (6) with greater heat resistance has at least one temperature-resistant fastening point (8);
**characterized in that**
the metal-plate element (6) with greater heat resistance extends like a frame along at least a part of the edge of the thermally shielding plate (4) made from aluminium.

## Revendications

1. Corps de protection thermique (2) comportant au moins un point de fixation thermorésistant (8), comprenant une tôle de protection thermique (4) en aluminium, dans lequel la tôle de protection thermique (4) présente au niveau d'au moins un des points de fixation une cavité, dans lequel dans la cavité un élément de tôle métallique (6) avec une résistance thermique supérieure est disposé, qui est relié sur le bord de la cavité ou de l'élément de tôle métallique par conjonction de matière avec la tôle de protection thermique (4), dans lequel au moins un point de fixation thermorésistant (8) est disposée sur l'élément de tôle métallique (6) ;
**caractérisé en ce que**
l'élément de tôle métallique (6) avec résistance thermique supérieure s'étend comme un châssis le long d'au moins une partie du bord de la tôle de protection thermique (4) en aluminium.

2. Corps de protection thermique (2) selon la revendication 1, dans lequel l'élément de tôle métallique (6) avec résistance thermique supérieure s'étend comme un châssis le long de la totalité du bord de la tôle de protection thermique en aluminium (4).

3. Corps de protection thermique (2) selon la revendication 1 ou 2, **caractérisé en ce que** l'élément de tôle métallique (6) avec une résistance thermique supérieure est relié essentiellement par points par conjonction de matière avec la tôle de protection thermique (4) en aluminium.

4. Corps de protection thermique (2) selon la revendication 1 ou 2, dans lequel l'élément de tôle métallique (6) avec résistance thermique supérieure est relié essentiellement le long de la totalité du bord ou le long du bord de la cavité en forme de ligne par conjonction de matière avec la tôle de protection thermique (4).

5. Corps de protection thermique (2) selon une des revendications précédentes, dans lequel la conjonction de matière est atteinte par soudure de tôle à impulsions électromagnétiques.

6. Corps de protection thermique (2) selon une des revendications précédentes, dans lequel la conjonction de matière est atteinte par soudure par friction ou soudure par friction orbitale.

7. Corps de protection thermique (2) selon une des revendications précédentes, dans lequel la conjonction de matière est atteinte par soudure aux ultrasons.

8. Corps de protection thermique (2) selon une des revendications précédentes, dans lequel la tôle de protection thermique (4) est composée de plusieurs couches, par exemple au moins deux tôles, dont au moins une est en aluminium, avec l'épaisseur totale comprise entre 2 mm et 10 mm ou plus de deux tôles en aluminium avec une épaisseur totale comprise entre 2 mm et 10 mm.

9. Corps de protection thermique (2) selon la revendication 8, dans lequel la tôle de protection thermique (4) comprend au moins deux couches, dans lequel les couches sont reliées l'une à l'autre par clinchage, bordage, rivetage, collage, assemblage par pression, rivetage par sertissage ou par soudure.

10. Corps de protection thermique (2) selon une des revendications précédentes, dans lequel l'élément de tôle métallique (6) est de l'acier revêtu ou de l'acier inoxydable avec résistance thermique supérieure avec une épaisseur comprise entre 0,2 mm et 1 mm.

11. Corps de protection thermique (2) selon une des revendications précédentes, dans lequel l'élément de tôle métallique (6) avec résistance thermique supérieure et la tôle de protection thermique (4) se superposent l'un à l'autre et sont reliés par conjonction de matière dans la zone de la superposition.

12. Corps de protection thermique (2) selon une des revendications précédentes, dans lequel l'élément de tôle métallique (6) avec résistance thermique supérieure et pourvu d'une structure, pour permettre un appui en forme de point ou en forme de ligne sur le composant chaud, et/ou minimiser la conduction thermique entre l'appui et la tôle de protection thermique (4).

13. Corps de protection thermique (2) selon une des revendications précédentes, comprenant en outre des éléments de l'élément de tôle mécanique (6) avec résistance thermique supérieure, qui sont reliés par conjonction de matière avec la tôle de protection thermique (4) et servent à renforcer la structure de la tôle de protection thermique (4).

14. Corps de protection thermique (2) selon une des revendications précédentes, comprenant en outre des supports, des clips, des embouts tubulaires ou des éléments filetés, qui sont reliés par conjonction de matière avec l'élément de tôle métallique (6) avec résistance thermique supérieure et/ou avec la tôle de protection thermique (4).

15. Procédé de fabrication d'un corps de protection thermique (2) selon une des revendications précédentes, comprenant au moins de :
fournir une tôle de protection thermique (4), qui est pourvu de cavités,
fournir un élément de tôle métallique (6) avec résistance thermique supérieure et relier par conjonction de matière l'élément de tôle métallique (6) avec resistance thermique supérieure avec la tôle de protection thermique (4) au moins dans une zone des cavités de la tôle de protection thermique (4), dans lequel l'élément de tôle métallique (6) avec résistance thermique supérieure présente au moins un point de fixation thermorésistant (8) ;
**caractérisé en ce que**
l'élément de tôle métallique (6) est fourni de telle sorte que l'élément de tôle métallique (6) s'étende comme un châssis le long d'au moins une partie du bord de la tôle de protection métallique (4) en aluminium.
